# EUROPÄISCHE PATENTSCHRIFT

(11) **EP 0 919 431 B1**
(45) Veröffentlichungstag und Bekanntmachung des Hinweises auf die Patenterteilung: **14.01.2004**
(21) Anmeldenummer: 98119109.1
(22) Anmeldetag: 09.10.1998
(51) Int. Cl.: B60N 3/10, B60R 7/06

(54) **Kraftfahrzeug mit mindestens zwei auf der Innenseite einer Handschuhkastenverschlussklappe angebrachten Funktionselementen**
Vehicle with at least two functional elements mounted on the inner side of a glove box cover
Véhicule avec au moins deux éléments fonctionnels montés à l'intérieur du couvercle d'une boîte à gants

(30) Priorität: 26.11.1997 DE 19752385
(43) Veröffentlichungstag der Anmeldung: 02.06.1999
(73) Patentinhaber: Volkswagen Aktiengesellschaft, 38436 Wolfsburg (DE)
(72) Erfinder: Dietze, Holger, 38162 Cremlingen (DE); Krumpholz, Christian, 85049 Ingolstadt (DE); Fischer, Hans-Peter, 85084 Reichertshofen (DE); Poweleit, Udo, 38465 Brome (DE)

(56) Entgegenhaltungen:
- EP-A- 0 724 982
- EP-A- 0 778 175
- EP-A- 0 795 437
- WO-A-90/02061
- DE-A- 4 302 868
- US-A- 3 386 765
- ANONYMOUS: "Glove Box Secondary Door and Improved Cup Holder" RESEARCH DISCLOSURE., Bd. 348, Nr. 24, April 1993, Seite 237 XP000304174 EMSWORTH GB

## Beschreibung

Die vorliegende Erfindung betrifft ein Kraftfahrzeug, umfassend einen Handschuhkasten mit einer schwenkbaren Verschlußklappe und mindestens einem auf einer dem Handschuhkasten zugewandten Innenseite der Verschlußklappe angebrachten, bei vollständig geschlossener Verschlußklappe nicht sichtbar im Inneren des Handschuhkastens untergebrachten und bei geöffneter Verschlußklappe gut zugänglichen Funktionselement.

Bei der Entwicklung von Personenkraftfahrzeugen geht es vielen Fahrzeugherstellern heute nicht mehr nur darum, den Fahrzeuginsassen das schnelle Erreichen eines Fahrtziels zu ermöglichen, sondern man trachtet vor allem danach, das Reisen selbst zu einem Erlebnis für die Fahrzeuginsassen zu machen, unter anderem durch einen erhöhten Reisekomfort. Dabei wird angestrebt, den Fahrzeuginsassen während der Fahrt möglichst alle Wünsche zu erfüllen, unter anderem die Kommunikation mit Dritten außerhalb des Fahrzeugs, die Suche des günstigsten Weges zu einem gewünschten Fahrtziel, die Unterbringung und Benutzung von mitgeführten, jedoch nicht immer benötigten Gegenständen, wie Brillen oder Sonnenbrillen, Tonträgern, d.h. Musikkassetten oder CDs, Einwegtüchem, oder den Konsum von Getränken, Süßigkeiten oder dergleichen. Dazu sind jedoch zunehmend mehr Funktionselemente erforderlich, wie beispielsweise Mobiltelefone, Faxgeräte, Geräte zur Datenfernübertragung oder elektronische Navigationshilfsmittel, die während der Fahrt von einem Beifahrer bedient werden können, und andere, wie Brillenhalter, Trinkgefäßhalter, Ablagen und Aufnahmebehälter für vielerlei Gegenstände, die zum einen so untergebracht oder in Teile der Innenausstattung integriert werden müssen, daß sie einerseits während der Fahrt bequem zu erreichen und gut zugänglich sind, jedoch andererseits bei einer scharfen Bremsung oder einem Unfall keine Gefahr für die Fahrzeuginsassen darstellen. Da in den meisten Fällen nicht alle, sondern nur bestimmte der oben genannten und anderer Funktionselemente benötigt oder vom Benutzer gewünscht werden, wäre es sehr vorteilhaft, diesem im Hinblick auf die gewünschten Elemente eine freie Auswahl oder wenigstens mehrere Alternativen anzubieten. Dabei sollten einerseits die oben genannten Kriterien der guten Zugänglichkeit und der Unfallsicherheit erfüllt sein, andererseits sollten jedoch die freie Auswahl bzw. die angebotenen Alternativen werksseitig ohne wesentliche Mehrkosten zu verwirklichen sein. Darüber hinaus sollten zusätzlich zu den bereits vorhandenen Elementen der Innenraumausstattung nach Möglichkeit keine weiteren Elemente hinzukommen, um das optische Erscheinungsbild des Innenraums und die Übersicht des Fahrers nicht zu beeinträchtigen.

Die genannten Kriterien lassen sich mit der üblicherweise in Kraftfahrzeugen vorhandenen Innenausstattung in einfacher Weise erfüllen, wenn man die gewünschten Funktionselemente auf der Innenseite einer Handschuhkasten-Verschlußklappe anbringt. Aus der DE 35 12 808 A1 ist bereits ein als Dosenhalter ausgebildetes Funktionselement bekannt, das sich so am fahrerseitigen Seitenrand einer Verschlußklappe eines Kraftfahrzeughandschuhkastens anbringen läßt, daß es sich bei geschlossener Klappe im Inneren des Handschuhkastens befindet und bei geöffneter Klappe annähernd waagerecht und für den Fahrer gut zugänglich ist. Jedoch ist wegen der geringen Höhe des Dosenhalters dessen Dosenaufnahmevertiefung sehr flach ausgebildet, so daß eine in dieser Vertiefung stehende Dose oder eine anderes Trinkgefäß schon bei einer scharfen Bremsung leicht umkippen kann, wobei es seinen Inhalt ins Handschuhfach ergießt. Ein weiterer Nachteil besteht darin, daß sich wegen der notwendigen waagerechten Ausrichtung des Dosenhalters die Verschlußklappe für einen Zugang zum Handschuhkasten nicht so weit wie üblich öffnen läßt und im wesentlichen horizontal ins Fahrzeuginnere übersteht, was sowohl vom Gesichtspunkt der Bequemlichkeit des Beifahrers als auch im Hinblick auf die Verletzungsgefahr bei einem Unfall ungünstig ist. Darüberhinaus findet sich in dieser Druckschrift weder ein Hinweis auf andere Funktionselemente noch auf deren Anbringung an der Verschlußklappe des Handschuhkastens.

Aus der EP 0 724 982 A2 ist weiter ein Kraftfahrzeug mit einer Einrichtung zum Aufbewahren von Geräten bekannt, von denen als Beispiel ein Telefon, ein Handeingabegerät und ein Drucker dargestellt sind. Die Einrichtung besteht hier aus einer oder mehreren, im Griffbereich des Fahrers angeordneten verriegelbaren Klappe(n), auf deren Innenseite(n) die Geräte teilweise fest und teilweise abnehmbar angeordnet sind. Jedoch weisen dort auch die abnehmbaren Geräte fest mit der Klappe verbundene Halterungen auf, die zudem unterschiedlich geformt und verschieden groß sind, so daß ein einfacher Austausch von Geräten mit wenig Aufwand nicht möglich ist. Da die Klappe nicht von der Verschlußklappe eines Handschuhkastens gebildet wird, sondern als zusätzliches Element im Bereich einer Mittelkonsole des Kraftfahrzeugs angeordnet ist, ist es jedoch dort anders als bei einem Handschuhfach möglich, die empfindlichen Geräte bei geschlossener Klappe durch eine gepolsterte Rückwand des mit der Klappe verschlossenen Geräteraums zu schützen.

Weiter ist in der DE U1 296 12 906 eine Arretierung für einen Getränkebehälter in Fahrzeugen offenbart, die aus einer quadratischen oder abgestuften eingeformten Vertiefung in einem ausklappbaren Tischchen an der Innenseite des Handschuhfachdeckels besteht.

Darüber hinaus beschreibt die DE 41 09 497 C1 einen Bildschirmarbeitsplatz in einem Fahrzeug, bei dem eine Tastatur und ein Bildschirm eines Laptop-Personal-Computers als Funktionselemente alternativ entweder hinter einer Rückenlehne eines Sitzes oder vor einem Handschuhfach des Fahrzeugs benutzt werden können und bei Nichtgebrauch im Inneren des Handschuhfachs verstaubar sind. Die Tastatur ist auf der Innenseite eines Verschlußdeckels des Handschuhfachs beweglich gelagert, so daß sie bei zugeklapptem Deckel "stehend" hinter dem Deckel im Handschuhfach verstaut ist.

Die gattungsbildende EP 0 795 437 A2 beschreibt einen auswechselbaren Handschuhkasten in einem Fahrzeug, der schienenartige Aufnahmen insbesondere für elektronische Geräte aufweist. Für die herausnehmbaren elektronischen Geräte befinden sich Anschlüsse und Verteiler für Strom und verschiedene Signale im Handschuhkasten, in die mittels Steckverbindungen die elektronischen Geräte eingeschoben werden. Die schienenartigen Aufnahmen besitzen für jedes elektronische Gerät eine individuelle "Spurweite".

Aufgabe der Erfindung ist, ein Kraftfahrzeug der eingangs genannten Art bereitzustellen, bei dem es mit geringem Aufwand möglich ist, verschiedene Funktionselemente einfach und in unterschiedlicher Anordnung auf der Innenseite der Verschlußklappe des Handschuhfachs anzubringen.

Die Aufgabe wird bei einem gattungsgemäßen Kraftfahrzeug erfindungsgemäß durch die kennzeichnenden Merkmale des Hauptanspruchs gelöst. Vorteilhafte Aus- und Weiterbildungen beschreiben die Unteransprüche.

Eine modulare Ausbildung der Funktionselemente bedeutet dabei, daß diese auf ihrer der Innenseite der Verschlußklappe zugewandten Unterseite jeweils im wesentlichen gleich ausgebildet sind, zumindest was die zur Befestigung der Funktionselemente dienenden Mittel betrifft, so daß sich die Funktionselemente ohne Veränderungen am Modulträger leicht gegeneinander austauschen lassen, um entweder ein oder mehrere andere Funktionselemente oder die gleichen Funktionselemente in einer anderen Anordnung oder Reihenfolge zu montieren.

Die modulare Austauschbarkeit ist ein wesentlicher Vorteil gegenüber der gattungsbildenden EP 0 795 437 A2. In der EP 0 795 437 A2, insbesondere in Fig. 1 und Fig. 2, werden zwar herausnehmbare elektronische Geräte gezeigt, die sich jedoch auf Grund des unterschiedlichen Abstands der Schienen nicht vertauschen lassen.

Eine bevorzugte Ausgestaltung der Erfindung sieht vor, daß zur lösbaren Befestigung der Funktionselemente auf der Innenseite der Verschlußklappe Steckverbindungen vorgesehen sind, welche einerseits Steckerelemente und andererseits Aufnahmeöffnungen für die Steckerelemente umfaßt. Während die ersteren zweckmäßig über eine der Verschlußklappe zugewandte Unterseite der Funktionselemente überstehen, sind die letzteren zweckmäßig auf der Innenseite der Verschlußklappe ausgebildet. Eine umgekehrte Anordnung ist jedoch ebenfalls möglich.

Da nicht sämtliche der vorgesehenen Funktionselemente dieselbe Größe aufweisen, sieht eine weitere bevorzugte Ausgestaltung der Erfindung vor, daß die Innenseite der Verschlußklappe als Steckfeld ausgebildet ist, das vorzugsweise ein Verschieben der Funktionselemente gestattet. Das Steckfeld kann dabei entweder durchgehend ausgebildet oder in zwei oder mehr gleichgroße Zonen unterteilt sein, wobei in diesem Fall die Funktionselemente je nach Größe oder Funktion eine oder mehrere Zonen überdecken. Wenn keine oder nur wenige Funktionselemente auf der Innenseite der Verschlußklappe vorgesehen sind, so daß diese nicht oder nur teilweise von den Funktionselementen bedeckt wird, wird das Steckfeld bzw. der nicht für Funktionselemente benötigte Rest des Steckfeldes gemäß einer weiteren bevorzugten Ausgestaltung der Erfindung mit einer Blende abgedeckt, die ebenfalls Steckerelemente oder Aufnahmeöffnungen für Steckerelemente aufweist und in entsprechender Weise wie die Funktionselemente befestigt wird.

Der Halt der Steckerelemente in den Aufnahmeöffnungen kann entweder durch einen reibschlüssigen oder einen formschlüssigen Eingriff sichergestellt werden. Während im zuerst genannten Fall zweckmäßig die Steckerelemente und/oder Begrenzungen der Aufnahmeöffnungen elastisch verformbar sind, wobei die unter Druck gegen die Begrenzungen der Aufnahmeöffnungen anliegenden Steckerelemente durch die Rückstellkräfte infolge einer elastischen Verformung der Steckerelemente und/oder der Begrenzungen im Reibeingriff mit den Aufnahmeöffnungen gehalten werden, weisen im zuletzt genannten Fall die Aufnahmeöffnungen zweckmäßig Hinterschneidungen auf, in welche seitlich überstehende Vorsprünge der Steckerelemente eingreifen, um die in die Aufnahmeöffnungen eingeführten Steckerelemente festzuhalten.

In einer bevorzugten Ausführungsform ist vorgesehen, daß die Verschlußklappe zwei in Bezug zueinander schwenkbare Klappenteile umfaßt, von denen ein äußeres Klappenteil auf seiner Innenseite die Funktionselemente trägt, und ein inneres Klappenteil bei vollständig geschlossener Verschlußklappe und/oder bei vollständig geöffneter Verschlußklappe mindestens einen Teil der Funktionselemente verdeckt, während bei geöffnetem äußerem Klappenteil und geschlossenem innerem Klappenteil die Funktionselemente auf der Innenseite des äußeren Klappenteils freiliegen und gut zugänglich sind. Das äußere Klappenteil läßt sich sowohl gemeinsam mit dem inneren Klappenteil als auch getrennt von diesem verschwenken, um im ersten Fall den Handschuhkasten zu öffnen, ohne die Funktionselemente freizulegen, und um im zweiten Fall die Funktionselemente freizulegen, ohne den Handschuhkasten vollständig zu öffnen. Wenn das zweite Klappenteil bei vollständig geschlossener oder bei vollständig geöffneter Verschlußklappe gegen das erste Klappenteil anliegt, können insbesondere empfindliche Funktionselemente, wie Mobiltelefone, Faxgeräte oder Tastaturen anderer elektronischer Geräte vor einer Beschädigung durch schwere, im Handschuhkasten mitgeführte Gegenstände oder bei deren Herausholen aus dem Handschuhkasten geschützt werden. Zum anderen kann umgekehrt eine Beschädigung von Gegenständen im Handschuhkasten, z.B. durch verschüttete Flüssigkeit aus einem vollen Trinkgefäß, verhindert werden, das während der Fahrt in einem als Trinkgefäß- oder Dosenhalter ausgebildeten Funktionselement mitgeführt wird, wenn nur das erste Klappenteil geöffnet wird, um die Funktionselemente freizulegen, während das zweite Klappenteil den Handschuhkasten weiterhin verschließt.

Ein Verschütten von Flüssigkeit durch Umkippen eines in einem Trinkgefäß- oder Dosenhalter mitgeführten Trinkgefäßes kann darüber hinaus auch noch dadurch verhindert werden, daß gemäß einer weiteren bevorzugten Ausgestaltung der Erfindung ein oberer Rand des Halters in Richtung eines oberen Randes des vom Halter aufgenommenen Trinkgefäßes beweglich ist, so daß er das Trinkgefäß in größerer Nähe zu dessen oberem Rand abstützt und dadurch ein Umkippen des Trinkgefäßes besser verhindert.

Im folgenden wird die Erfindung anhand einiger in der Zeichnung dargestellter Ausführungsbeispiele näher erläutert. Es zeigen
- Fig. 1:: eine perspektivische Ansicht einer Verschlußklappe eines Handschuhkastens eines erfindungsgemäßen Kraftfahrzeugs, auf deren Innenseite mehrere modular ausgebildete Funktionselemente austauschbar befestigt sind;
- Fig. 2:: eine perspektivische Ansicht einer weiteren geöffneten Verschlußklappe, die zum Teil mit anderen Funktionselementen versehen ist;
- Fig. 3:: eine Draufsicht auf die Verschlußklappe aus Fig. 2, jedoch in einem nur teilweise mit Funktionselementen bestückten Zustand;
- Fig. 4:: eine Querschnittsansicht durch die Verschlußklappe aus Fig. 3 vor der Bestückung mit Funktionselementen;
- Fig. 5:: eine Querschnittsansicht durch die Verschlußklappe nach der Bestückung mit einer Abdeckende;
- Fig. 6:: eine Querschnittsansicht durch die Verschlußklappe entlang der Linie VI-VI der Fig. 2;
- Fig. 7:: eine Querschnittsansicht durch die Verschlußklappe entlang der Linie VII-VII der Fig. 3;
- Fig. 8:: eine Querschnittsansicht des als Trinkgefäßhalterung ausgebildeten Funktionselements aus Fig. 7 nach einem Teleskopieren;
- Fig. 9:: eine Querschnittsansicht einer modifizierten, aus zwei Teilen bestehenden und mit Funktionselementen bestückten Verschlußklappe in geschlossenem Zustand;
- Fig. 10:: eine Ansicht entsprechend Figur 9, jedoch bei teilweise geöffneter Verschlußklappe;
- Fig. 11:: eine Ansicht entsprechend Fig. 9, jedoch bei vollständig geöffneter Verschlußklappe.

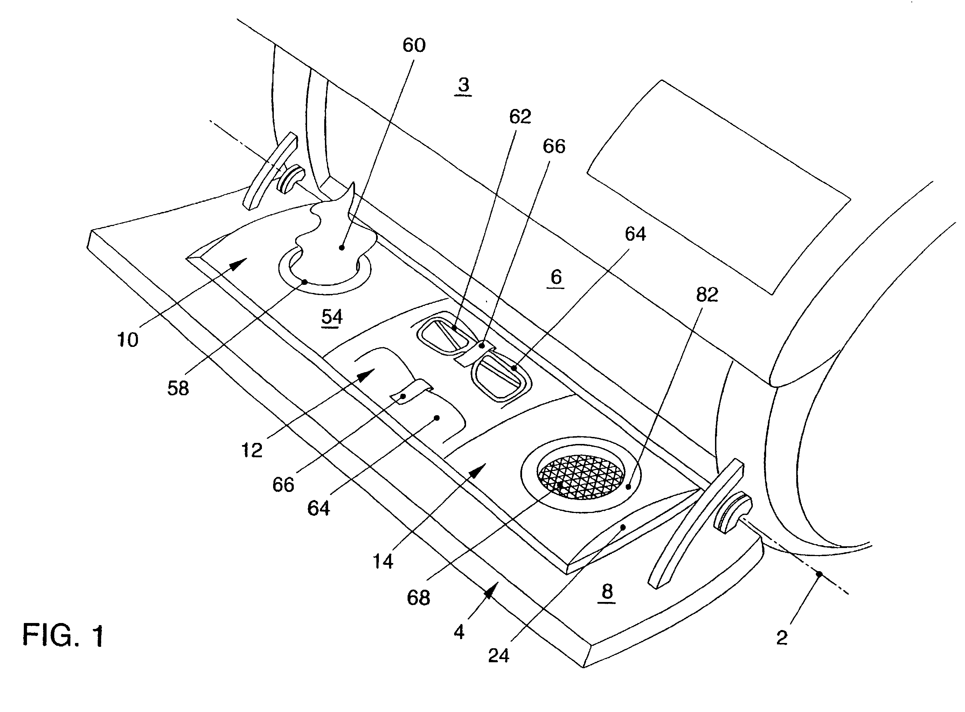

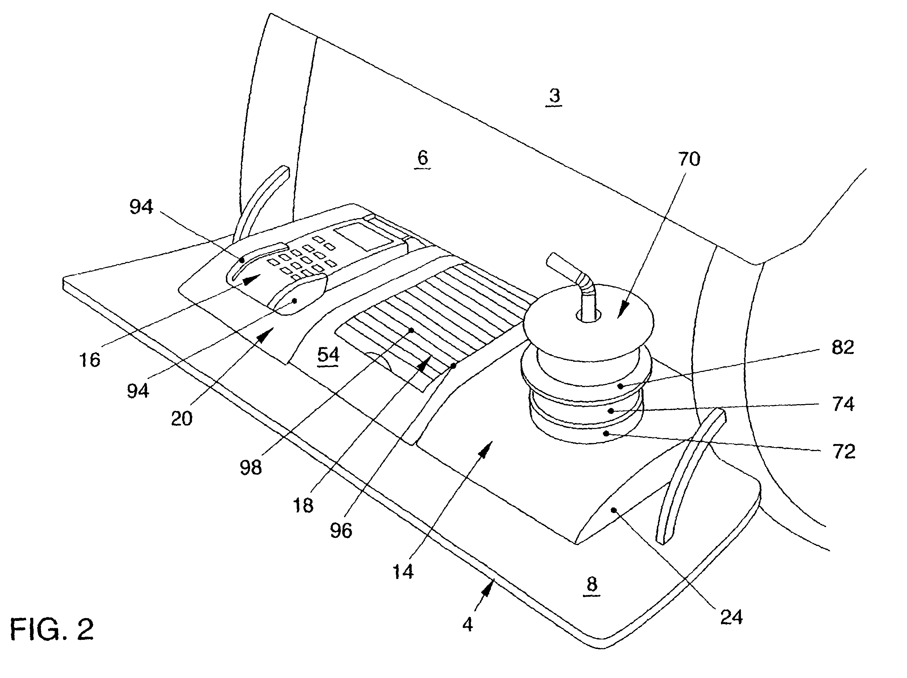

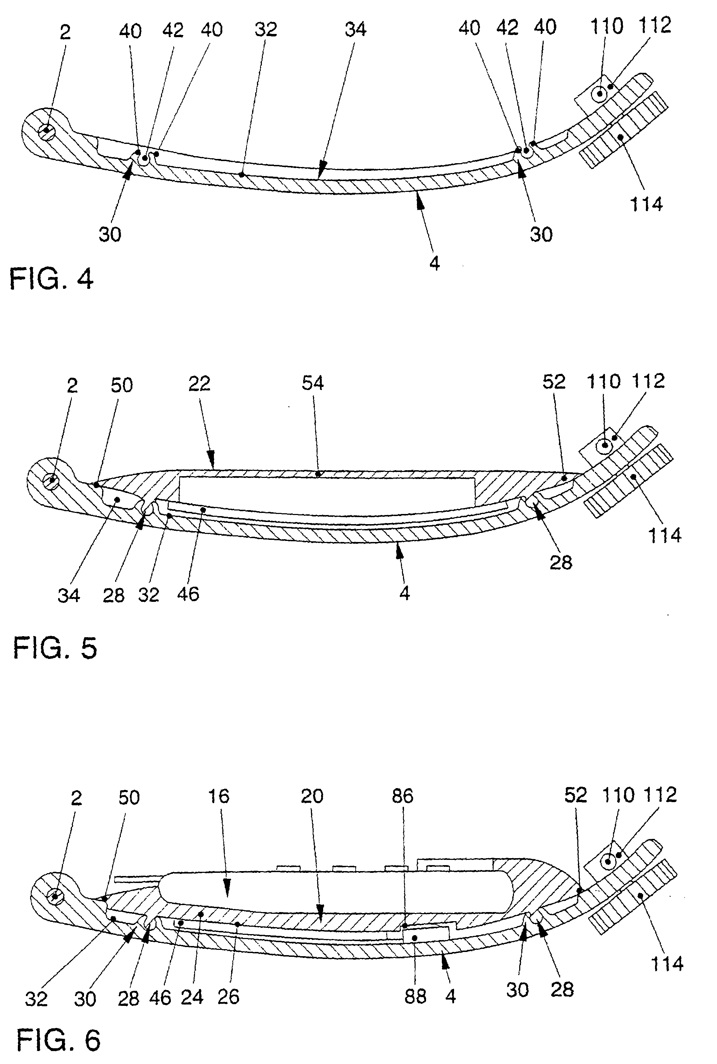

Die in den Figuren 1 bis 8 dargestellte, um eine horizontale Schwenkachse 2 gegenüber einer Instrumententafel 3 eines Personenkraftwagens verschwenkbare Verschlußklappe 4 eines Handschuhkastens 6 ist auf ihrer dem Handschuhkasten 6 zugewandten, als Modulträger ausgebildeten Innenseite 8 mit jeweils drei Funktionselementen 10, 12, 14, 16, 18 bestückt, die in Fig. 1 von links nach rechts gesehen aus einem Kosmetiktuch-Spender 10, einen Brillenhalter 12 und einen Trinkgefäß- oder Dosenhalter 14 bestehen. In Fig. 2 sind der Kosmetiktuch-Spender 10 und der Brillenhalter 12 gegen ein Mobiltelefon 16 mit Halterung 20 bzw. ein kleines verschließbares Ablagefach 18 ausgetauscht worden. Alternativ können auch andere Funktionselemente, wie beispielsweise ein Fax-Gerät oder ein Laptop-Computer (nicht dargestellt) vorgesehen sein, deren Breite der Breite von zwei oder drei der in Fig. 1 oder 2 dargestellten Funktionselemente 10, 12, 14, 16, 18 entspricht. Die Anbringung von schmaleren Funktionselementen, wie beispielsweise einer Halterung für Parkmünzen, Notizblock und Schreibstifte, Telefonkarten und dergleichen bzw. eines Rechners im Taschenrechnerformat oder einer geringeren Anzahl von Funktionselementen ist ebenfalls möglich, wobei dann der Rest des als Steckfeld ausgebildeten Modulträgers mit einer das Steckfeld verdeckenden Blende 22 bestückt wird, wie in Fig. 5 dargestellt.

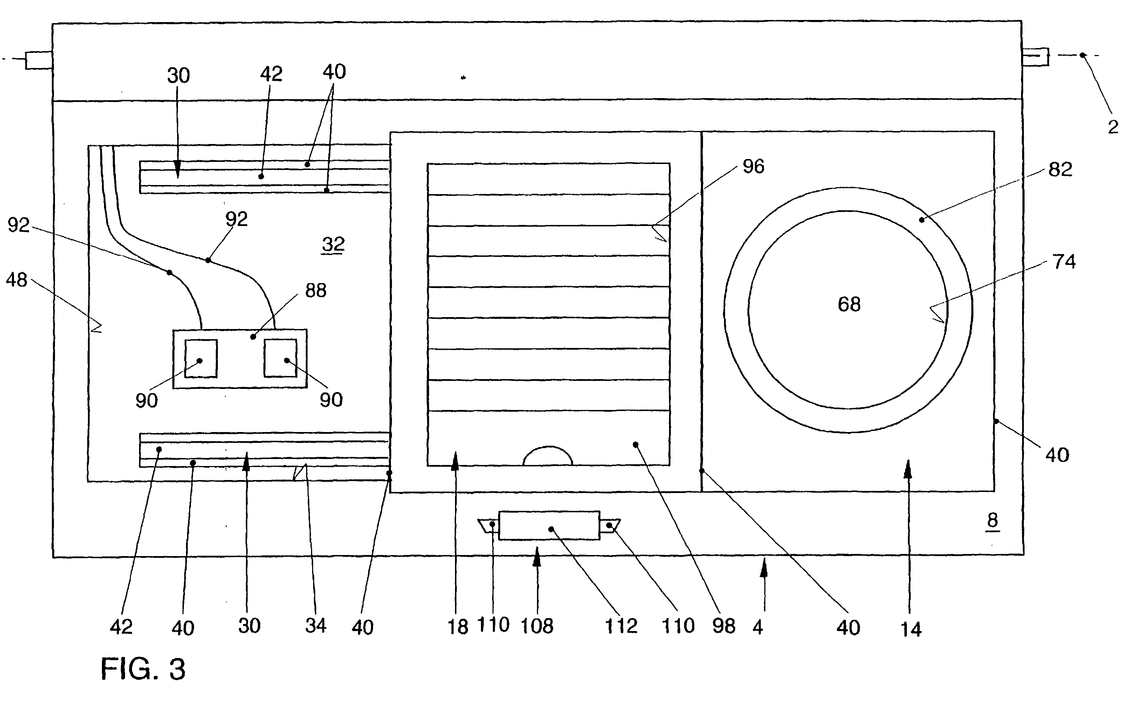

Die einzelnen Funktionselemente 10, 12, 14, 18 bzw. beim Mobiltelefon 16 die Halterung 20 besitzen jeweils einen Basisteil 24, der auf seiner der Verschlußklappe 4 zugewandten Unterseite 26 zwei im Abstand voneinander angeordnete langgestreckte parallele Steckerelemente 28 aufweist, die sich lösbar mit zwei auf der Innenseite der Verschlußklappe 4 vorgesehenen und parallel zur Schwenkachse 2 in Längsrichtung der Verschlußklappe 4 verlaufenden Steckerleisten 30 des Modulträgers verrasten lassen, welche einen dem Abstand der Steckerelemente 28 entsprechenden Abstand aufweisen und über den Boden 32 einer auf der Innenseite der Verschlußklappe 4 vorgesehenen flachen rechteckigen Aussparung 34 überstehen (vgl. Fig. 3 und 4).

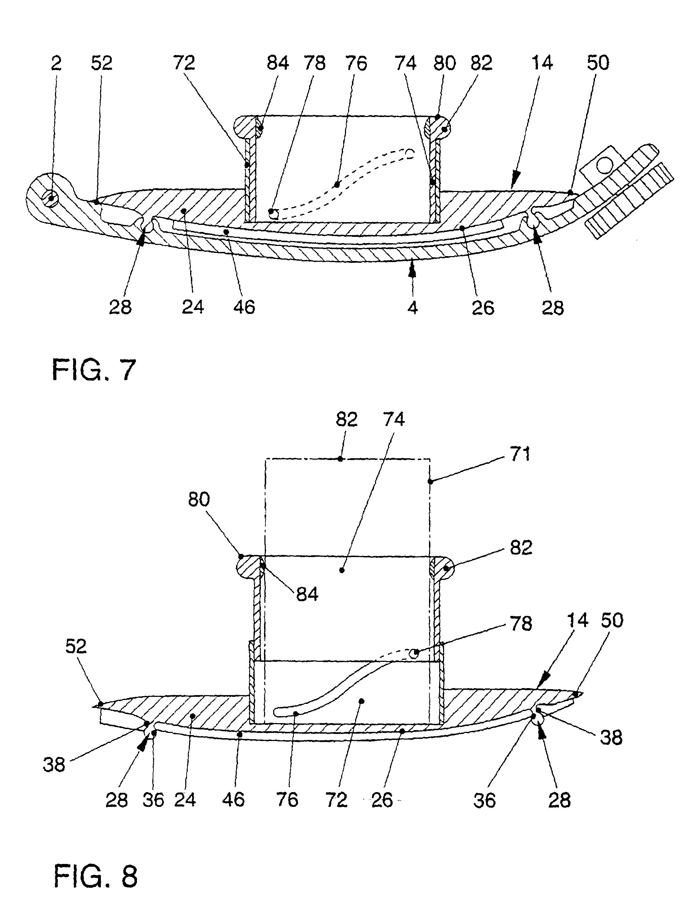

Die über die Unterseite 26 der Basisteile 24 überstehenden, einstückig mit den Basisteilen 24 verbundenen Steckerelemente 28 sind im Querschnitt im wesentlichen pilzförmig ausgebildet und weisen einen im Querschnitt kreisförmigen Kopf 36 sowie einen dünneren Hals 38 auf, welcher den Kopf 36 mit den Basisteil 24 verbindet (vgl. Fig. 8). Um die Stabilität der Steckerelemente 28 zu verbessern, erstrecken sich diese zweckmäßig über einen Großteil der Breite des Basisteils 24, wobei sie jeweils in einem gewissen Abstand von dessen quer zur Schwenkachse 2 verlaufenden Seitenrändem 48 enden.

Die auf der Innenseite 8 der Verschlußklappe 4 angeformten Einsteckleisten 30 bestehen jeweils aus zwei einander gegenüberliegenden parallelen Stegen 40, die eine rinnenförmige Aufnahmeöffnung 42 mit einem dem Querschnitt der Steckerelemente 28 entsprechenden Querschnitt begrenzen (vgl. Fig. 4). Die aufeinander zu gebogenen freien Enden der Stege 40 sind ausreichend elastisch verformbar, um den Kopf 36 der Steckerelemente 28 durch Druck auf die Oberseite des Basisteils 24 mit der Einsteckleiste 30 zu verrasten.

Zwischen den entgegengesetzten Enden der Einsteckleisten 30 und den Seitenrändem 48 stehen jeweils zwei parallele Anschlagleisten 46 quer zur Schwenkachse 2 über die Unterseite 26 der Basisteile 24 über, die bei den Basisteilen 24 der zu den seitlichen Rändern 48 der Aussparung 34 benachbarten Funktionselementen 10, 14, 20 gegen diese seitlichen Ränder 48 anschlagen und ein Verschieben der jeweils äußeren Funktionselemente 10, 14, 20 in Längsrichtung der Verschlußklappe 4 verhindern. Die Anschlagleisten 46 ermöglichen es, die Basisteile 24 der jeweils äußeren Funktionselemente 10, 14, 20 so auf dem Modulträger anzubringen, daß ihre Seitenränder 40 die seitlichen Ränder 48 der Aussparung 34 etwas überlappen. Die Abmessungen der Basisteile 24 in Richtung der Schwenkachse 2 und senkrecht dazu sind so gewählt, daß zum einen der von der Schwenkachse 2 abgewandte vordere und der zur Schwenkachse benachbarte hintere Rand 52, 50 des Basisteils den vorderen bzw. hinteren Rand der Aussparung 34 etwas überlappt, und daß zum anderen zwei, drei oder mehr Basisteile 24 von Funktionselementen 10, 12, 14, 16, 18 und/oder Blendenteile 22 in Längsrichtung der Schwenkachse 22 lückenlos nebeneinander auf dem Steckfeld Platz finden. Nach der Anbringung der Funktionselemente 10, 12, 14, 16, 18 liegen deren Ränder mit ihrer Unterseite von oben gegen den umlaufenden Rand der Aussparung 34 an, wie in den Figuren 4 bis 8 dargestellt.

Die Basisteile 24 der Funktionselemente 10, 12, 14, 16, 18 lassen sich durch Verrasten der Steckerelemente 28 in den Einsteckleisten 30 schnell und einfach mit der Verschlußklappe 4 verbinden und können leicht ausgetauscht werden, zum Beispiel, indem man einen Schraubenzieher oder ein anderes Werkzeug unter den vorderen Rand 52 der Basisteile 24 schiebt und zuerst die benachbarte vordere Steckverbindung 28, 30 löst, bevor durch weiteres Anheben des vorderen Randes 52 des Basisteils 24 die andere, hintere Steckverbindung 28, 32 gelöst wird.

Bei dem in Fig. 1 dargestellten Kosmetiktuch-Spender 10 dient das Basisteil 24 selbst als Funktionselement. Wie die in Fig. 5 dargestellte Blende 22 wird es abgesehen von seinen Rändern nach oben zu durch eine dünne Wand 54 begrenzt, die jedoch im Unterschied zur Blende 22 eine Entnahmeöffnung 58 für die Kosmetiktücher 60 aufweist. Auf der Unterseite ist der Kosmetiktuch-Spender wie bei der in Fig. 5 dargestellten Blende 22 zwischen den beiden Steckerelementen 28 offen, so daß sich ein zum Beispiel aus Karton bestehender flacher schalenartiger Vorratsbehälter mit zusammengefalteten Kosmetiktüchern (nicht dargestellt) unter die Entnahmeöffnung 58 stellen läßt. Zum Austausch des Vorratsbehälters kann das Basisteil 24 wie oben beschrieben oder durch Einführen eines Fingers in die Entnahmeöffnung 58 und Ausüben einer nach oben gerichteten Zugkraft auf die obere Wand 54 des Hohlkörpers von der Verschlußklappe 4 gelöst werden.

Demgegenüber ist bei dem in Fig. 1 dargestellten, als Brillenhalter 12 ausgebildeten Funktionselement die Oberseite des Basisteils 24 so ausgebildet, daß sich dort eine oder zwei Brillen 62 festklemmen lassen. Die vorzugsweise mit einem weichen Stoff, wie beispielsweise Samt, beschichtete Oberseite des Basisteils 24 weist dazu zwei flache Vertiefungen 64 auf, deren Form im wesentlichen der Form einer zusammengeklappten Brille 62 entspricht. Um ein Herausfallen der Brille 62 aus der Vertiefung 64 zu verhindern, ist jeweils im Bereich eines Nasenbügels der Brille 62 eine Federzunge 66 vorgesehen, deren hinteres Ende fest mit dem Basisteil 24 verbunden ist, während ihr freies Ende zum Unterschieben des Nasenbügels der Brille 62 nach vorne weist. Auf diese Weise wird verhindert, daß eine im Brillenhalter 12 befindliche Brille 62 bei geschlossener Verschlußklappe 4 nach hinten und unten aus der Vertiefung 64 herausrutschen kann.

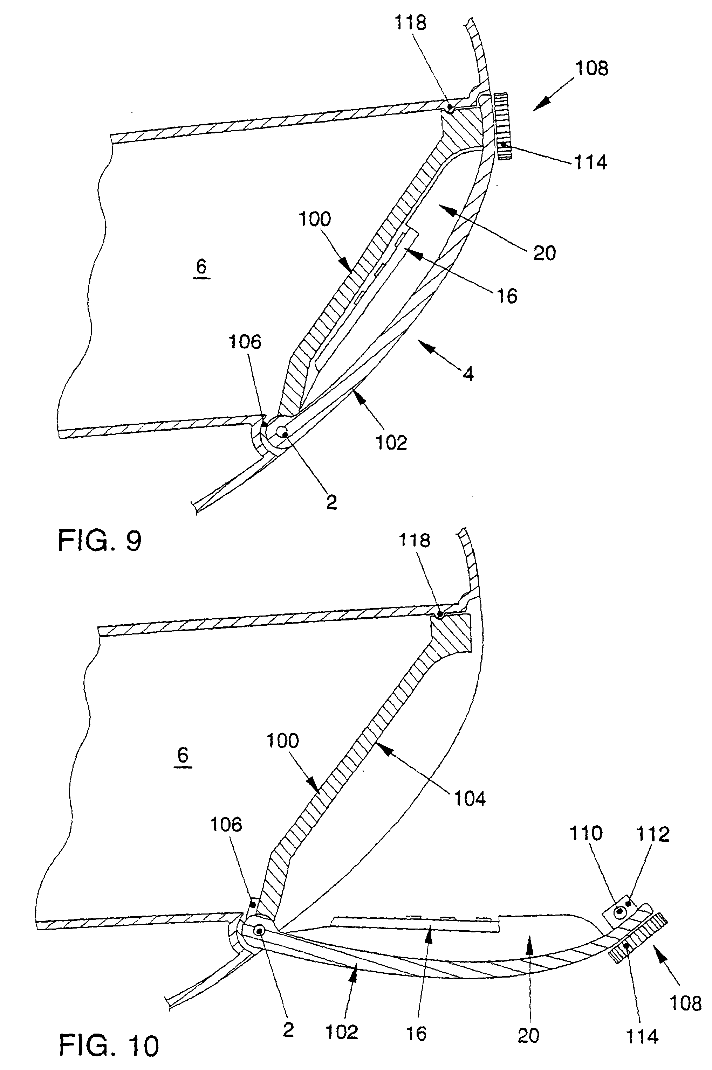

Das in Fig. 1 und 2 ganz rechts neben dem Brillenhalter 12 bzw. neben dem Ablagefach 18 angeordnete, als Trinkgefäß- oder Dosenhalter 14 ausgebildete Funktionselement besitzt einen Basisteil 24, der eine nach oben offene zylindrische Aussparung 68 mit ebenem Boden zur Aufnahme eines Trinkbechers 70 (Fig. 1) oder einer Getränkedose 71 (in Fig. 9 strichpunktiert dargestellt) aufweist. Um trotz der verhältnismäßig geringen Höhe des Basisteils 24 im Fall einer scharfen Bremsung ein Umkippen des Trinkbechers 70 oder der Getränkedose 71 zu verhindern, sind in die Aussparung 68 des Basisteils zwei ineinandergreifende zylindrische Ringe 72, 74 eingesetzt, wobei der untere Ring 72 zum Beispiel durch Kleben oder dergleichen starr mit dem Basisteil 24 verbunden ist, während der obere Ring 74 mit seiner zylindrischen Außenfläche gegen die zylindrische Innenfläche des unteren Rings 72 anliegt, so daß er innerhalb des unteren Rings 72 um die vertikale Mittelachse der beiden Ringe 72, 74 drehbar und axial verschiebbar ist. In der Wand des unteren Rings 72 ist eine Kulissenführung 76 in Form eines Abschnitts einer Sinuskurve vorgesehen, in die ein nach außen über die Wand des oberen Rings 74 überstehender Führungsnocken 78 eingreift, so daß sich der obere Ring 74 durch Drehen um die Mittelachse nach oben oder unten bewegt. Im zuerst genannten Fall nähert sich dadurch ein oberer Rand 80 des oberen Rings dem oberen Rand 82 des im Halter 14 stehenden Trinkgefäßes 70 bzw. der Getränkedose 71 und sorgt somit für eine stabilere Abstützung derselben. Die beiden Ringe 72, 74 sind in den Figuren 7 und 8 zu Veranschaulichungszwecken etwas höher dargestellt, als dies in der Praxis der Fall sein wird.

Der obere Rand 80 des oberen Rings 74 weist einen nach außen überstehenden Griffwulst 82 auf, der das Ergreifen und Drehen des Rings 74 erleichtert, und ist zudem mit einem nach innen überstehenden Schaumstoffwulst 84 versehen, der sich zusammendrücken läßt und ein Wackeln des Trinkgefäßes 70 oder der Dose 71 im Halter 14 verhindert.

Bei dem in Fig. 2 an Stelle des Kosmetiktuch-Spenders 10 dargestellten, als Mobiltelefon 16 mit Halterung 20 ausgebildeten Funktionselement wird der Basisteil 24 von der Halterung 20 des Mobiltelefons 16 gebildet. Die zum Aufladen eines Akkus des Mobiltelefons 16 dienende Halterung 20 weist auf ihrer der Innenseite 8 der Verschlußklappe 4 zugewandten Unterseite eine Ausnehmung 86 auf, in der nebeneinander zwei Anschlußkontakte (in Fig. 6 nicht sichtbar) angeordnet sind. Auf dem Boden der Aussparung 34 des Modulträgers befindet sich ein elektrisches Kontaktelement 88 mit zwei nebeneinander angeordneten Federkontakten 90, die nach dem Verrasten des Basisteils 24 auf der Verschlußklappe 4 gegen die Anschlußkontakte der Halterung 20 angepreßt werden. Die Federkontakte 90 des Kontaktelements 88 sind über Kabel 92 mit der Fahrzeugbatterie bzw. mit Masse verbunden.

Wie herkömmliche Mobiltelefonhalterungen weist die vom Basisteil 24 gebildete Halterung 20 zwei schwenkbare, das Mobiltelefon 16 seitlich und auf der Vorderseite etwas übergreifende Seitenwangen 94 auf, so daß das Mobiltelefon 16 aus einer liegenden Stellung (Fig. 2) in eine aufrechte Stellung (nicht dargestellt) verschwenkt werden kann.

An Stelle des Mobiltelefons 16 können über dem mit dem Kontaktelement 88 versehenen Teil des Steckfeldes andere Funktionselemente angebracht werden, die an das elektrische Bordnetz angeschlossen werden müssen, wie beispielsweise ein mobiles Fax-Gerät, ein Navigationssystem, ein Rasierapparat oder ein Flaschenwärmer für Säuglingstrinkflaschen. Selbstverständlich können statt einem auch mehrere Kontaktelemente 88 in einem dem Abstand der Funktionselemente entsprechenden Abstand auf dem Modulträger angeordnet werden.

Das in Fig. 2 zwischen dem Mobiltelefon 16 und dem Trinkgefäßhalter 14 angeordnete, als verschließbare Ablage 12 ausgebildete Funktionselement besteht wie die Blende 22 oder der Kosmetiktuch-Spender 10 im wesentlichen aus einem hohlen Basisteil 24, dessen obere Wand 54 jedoch eine rechteckige Aussparung 96 aufweist. Die entgegengesetzten Seitenränder der Aussparung bilden eine Führung für ein Verschlußrollo 98, das sich zum Öffnen nach hinten in Richtung der Schwenkachse 2 der Verschlußklappe 4 verschieben läßt, wobei die gelenkig miteinander verbundenen Rolloteile wie bei herkömmlichen Rollos auf einem nicht dargestellten Aufwickelmechanismus aufgewickelt werden.

Im Unterschied zu den zuvor beschriebenen Ausführungsbeispielen ist die in den Figuren 9 bis 11 dargestellte Verschlußklappe 4 zweiteilig ausgebildet und besteht aus einem inneren und einem äußeren Klappenteil 100, 102, die beide in Bezug zum Handschuhkasten 6 und in Bezug zueinander um die Schwenkachse 2 verschwenkbar sind. Die Funktionselemente, von denen in den Figuren 9 bis 11 nur ein Mobiltelefon 16 mit Halterung 20 sichtbar ist, sind in ähnlicher Weise, wie zuvor in Verbindung mit den Figuren 1 bis 8 beschrieben, austauschbar auf der als Modulträger ausgebildeten Verschlußklappe 4 befestigt.

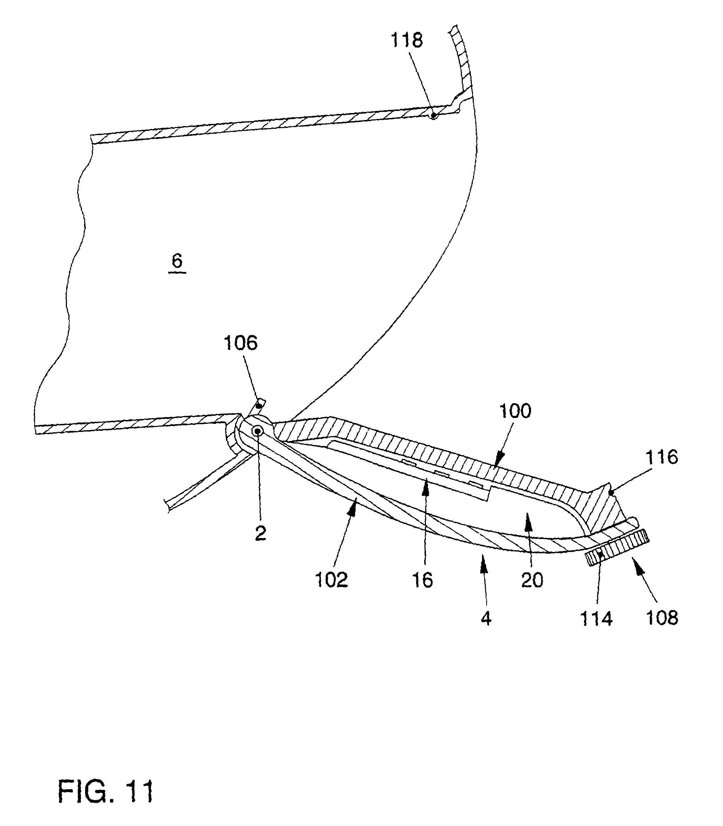

Das als Schutz für die Funktionselemente 10, 12, 14, 16, 18 dienende bzw. den Handschuhkasten 6 bei freiliegenden Funktionselementen 10, 12, 14, 16, 18 verschließende innere Klappenteil 100 ist so geformt, daß es die auf der Innenseite des äußeren Klappenteils 102 montierten Funktionselemente 10, 12, 14, 16, 18 in geringem Abstand überdeckt, wenn die beiden Klappenteile 100, 102 bei vollständig geöffneter oder vollständig geschlossener Verschlußklappe 4 gegeneinander anliegen, wie in Fig. 9 und 11 dargestellt. Die den Funktionselementen 10, 12, 14, 16, 18 gegenüberliegende Außenseite 104 des inneren Klappenteils 100 weist dabei eine zu den Oberseiten der Funktionselemente 10, 12, 14, 16, 18 im wesentlichen komplementäre Form auf und besteht zweckmäßig aus einem weichen Material, das bei geschlossenem innerem Klappenteil 100 und freiliegenden Funktionselementen 10, 12, 14, 16, 18 ein ansprechendes Erscheinungsbild besitzt und beispielsweise dem Material der benachbarten Innenverkleidung oder der Verkleidung der Instrumententafel 3 entspricht.

Die schwenkbare Befestigung des inneren und äußeren Klappenteils 100, 102 an der Instrumententafel 3 kann mittels kammartig ineinandergreifender Lagerabschnitte des inneren und des äußeren Klappenteils 100, 102 erfolgen, die abwechselnd nebeneinander auf der Schwenkachse 2 angeordnet sind und fluchtende Durchgangsbohrungen aufweisen, durch die eine zur Lagerung der Verschlußklappe 4 an beiden Enden überstehende durchgehende Stange hindurchgeschoben wird.

Über das äußere Klappenteil 102 steht in der Nähe der Schwenkachse 2 eine Anschlagnase 106 über, die in der in Fig. 10 dargestellten Schwenkstellung bei geöffnetem äußerem Klappenteil 102 gegen die Innenseite des geschlossenen inneren Klappenteils 100 anschlägt und das Klappenteil 102 in einer Schwenkstellung hält, in der seine Oberseite im wesentlichen waagerecht ist, wie dies beispielsweise für ein als Trinkgefäßhalter 14 ausgebildetes Funktionselement erwünscht ist. Demgegenüber läßt sich das innere und das äußere Klappenteil 100, 102 über die in Fig. 10 dargestellte horizontale Schwenkstellung des äußeren Klappenteils 102 hinaus nach unten verschwenken, wenn zum Öffnen des Handschuhkastens 6 beide Klappenteile 100, 102 gemeinsam verschwenkt werden (vgl. Fig. 11).

Die Verbindung zwischen dem äußeren und dem inneren Klappenteil 100, 102 wird durch einen Verriegelungsmechanismus 108 der Verschlußklappe 4 hergestellt, der wie der in Fig. 3 dargestellte herkömmliche Verriegelungsmechanismus 108 zwei Verriegelungsnasen 110 aufweist, die nach entgegengesetzten Seiten über einen Schtoßtei) 112 überstehen und durch Drehen eines auf der Außenseite der Verschlußklappe 4 angebrachten Betätigungsknopfs 114 ins Innere des Schloßteils 112 zurückgezogen werden. Während jedoch bei dem in Fig. 3 dargestellten bekannten Verriegelungsmechanismus 108 eine Drehung des Betätigungsknopfs 114 unabhängig von der Drehrichtung ein Zurückziehen beider Verriegelungsnasen 110 bewirkt, hat bei dem in den Figuren 9 bis 11 dargestellten Ausführungsbeispiel eine Drehung des Betätigungsknopfs nach rechts ein Zurückziehen der rechten Verriegelungsnase 110 zur Folge, während eine Drehung nach links ein Zurückziehen der linken Verriegelungsnase 110 bewirkt.

Während die rechte Verriegelungsnase 110 bei geschlossener Verschlußklappe 4 mit einer im Inneren des Handschuhkastens 6 angeordneten Aufnahmeöffnung der Instrumententafel 3 (nicht dargestellt) im Eingriff steht, steht die linke Verriegelungsnase 110 mit einer Aufnahmeöffnung des inneren Klappenteils 100 im Eingriff, so daß durch eine Drehung des Betätigungsknopfes 114 nach rechts beide Klappenteile 100, 102 gemeinsam geöffnet werden, während eine Drehung nach links dazu führt, daß nur das äußere Klappenteil 102 geöffnet wird.

In der in Fig. 9 dargestellten Schwenkstellung der beiden Klappenteile 100, 102 bei vollständig geschlossener Verschlußklappe 4 liegen die Klappenteile 100, 102 gegeneinander an, wobei die dazwischen angeordneten Funktionselemente 10, 12, 14, 16, 18 und insbesondere empfindliche Funktionselemente, wie beispielsweise das Mobiltelefon 16, oder von den Funktionselementen gehaltene empfindliche Gegenstände, wie beispielsweise Brillen 62. durch das innere Klappenteil 100 geschützt sind, das verhindert, daß sie sich zum Beispiel bei einer scharfen Bremsung oder bei einem leichten Auffahrunfall vom Modulträger bzw. aus ihrem Halter 12 auf dem äußeren Klappenteil 102 lösen und ins Innere des Handschuhkastens 6 geschleudert werden, wobei entweder sie selbst oder dort befindliche Gegenstände beschädigt werden.

In der in Fig. 10 dargestellten Schwenkstellung des äußeren Klappenteils 102 bei teilweise geöffneter Verschlußklappe 4 liegen die Funktionselemente 10, 12, 14, 16, 18 frei und sind gut zugänglich, während der Handschuhkasten 6 geschlossen bleibt, so daß sich beim Umkippen eines im Trinkgefäßhalter 14 auf dem äußeren Klappenteil 102 stehenden Trinkgefäßes 70 dessen Inhalt nicht in den Handschuhkasten 6 ergießen kann. Da die Öffnung und der Inhalt des Handschuhkastens 6 durch das innere Klappenteil 100 verdeckt werden und daher nicht sichtbar sind, verbessert das geschlossene innere Klappenteil 100 außerdem das äußere Erscheinungsbild der Instrumententafel 3 bei freiliegenden Funktionselementen 10. 12, 14, 16, 18.

In dieser horizontalen Schwenkstellung wird das innere Klappenteil 100 durch eine über die innere Begrenzungswand des Handschuhkastens 6 überstehende und in eine Rastvertiefung 116 des inneren Klappenteils 100 eingreifende Rastnase 118 in seiner Lage gehalten. Eine Fingeröffnung (nicht dargestellt) im inneren Klappenteil 100 gestattet es, das innere Klappenteil 100 aus dem Rasteingriff zu lösen und nach unten zu schwenken, um es in die in Fig. 11 dargestellte Schwenkstellung zu bringen.

In der in Fig. 11 dargestellten Schwenkstellung der beiden Klappenteile 100, 102 bei vollständig geöffneter Verschlußklappe 4 sind die auf dem äußeren Klappenteil 102 montierten Funktionselemente 10, 12, 14, 16, 18 ebenfalls durch das innere Klappenteil 100 geschützt, so daß die Funktionselemente 10, 12, 14, 16, 18, wie beispielsweise das Mobiltelefon, nicht versehentlich beschädigt werden können, wenn zum Beispiel ein im Inneren des Handschuhkastens 6 aufbewahrter Gegenstand beim Herausholen auf die Verschlußklappe 4 fällt. Da sich die Verschlußklappe 4 im Vergleich zu der in Fig. 10 dargestellten Schwenkstellung weiter nach unten schwenken läßt, ist außerdem der Handschuhkasten 6 besser zugänglich und der Freiraum für die Beine eines Beifahrers größer.

## Patentansprüche

1. Kraftfahrzeug, enthaltend einen Handschuhkasten mit einer schwenkbaren Verschlußklappe und mindestens einem, auf einer dem Handschuhkasten zugewandten Innenseite der Verschlußklappe angebrachten, bei vollständig geschlossener Verschlußklappe nicht sichtbar im Inneren des Handschuhfachs untergebrachten und bei geöffneter Verschlußklappe gut zugänglichen Funktionselement, **dadurch gekennzeichnet, daß** auf der als Modulträger ausgebildeten Innenseite (8) der Verschlußklappe (4) mindestens zwei unterschiedliche modular ausgebildete Funktionselemente (10, 12, 14, 16, 18) gegeneinander austauschbar befestigt sind.

2. Kraftfahrzeug nach Anspruch 1, **dadurch gekennzeichnet, daß** die Funktionselemente (10, 12, 14, 16, 18) mittels Steckverbindungen (28, 30) lösbar auf der Innenseite (8) der Verschlußklappe (4) befestigt sind.

3. Kraftfahrzeug nach Anspruch 2, **dadurch gekennzeichnet, daß** die Steckverbindungen (28, 30) über eine der Verschlußklappe (4) zugewandte Unterseite (26) der Funktionselemente (10, 12, 14, 16, 18) überstehende Steckerelemente (28) und auf der Innenseite (8) der Verschlußklappe (4) ausgebildete Aufnahmeöffnungen (42) für die Steckerelemente (28) aufweisen.

4. Kraftfahrzeug nach Anspruch 3, **dadurch gekennzeichnet, daß** die in die Aufnahmeöffnungen (42) eingeführten Steckerelemente (28) reibschlüssig im Eingriff mit den Aufnahmeöffnungen (42) gehalten werden.

5. Kraftfahrzeug nach Anspruch 3 oder 4, **dadurch gekennzeichnet, daß** die Steckerelemente (28) und/oder Begrenzungen (40) der Aufnahmeöffnungen (42) elastisch verformbar sind.

6. Kraftfahrzeug nach Anspruch 5, **dadurch gekennzeichnet, daß** die Steckerelemente (28) durch Rückstellkräfte infolge einer elastischen Verformung der Steckerelemente (28) und/oder der Begrenzungen der Aufnahmeöffnungen (42) reibschlüssig im Eingriff mit den Aufnahmeöffnungen (42) gehalten werden.

7. Kraftfahrzeug nach Anspruch 5, **dadurch gekennzeichnet, daß** die Steckerelemente (28) durch Verrastung im Eingriff mit den Aufnahmeöffnungen (42) gehalten werden.

8. Kraftfahrzeug nach Anspruch 7, **dadurch gekennzeichnet, daß** die Aufnahmeöffnungen (42) Hinterschneidungen für ein erweitertes freies Ende (38) der Steckerelemente (28) aufweisen.

9. Kraftfahrzeug nach einem der Ansprüche 3 bis 8, **dadurch gekennzeichnet, daß** mindestens die Aufnahmeöffnungen (42) langgestreckt ausgebildet sind und ein Verschieben der Funktionselemente (10, 12, 14, 16, 18) in Längsrichtung der Verschlußklappe (4) gestatten.

10. Kraftfahrzeug nach einem der Ansprüche 1 bis 8, die Innenseite (8) der Verschlußklappe (4) als Steckfeld ausgebildet und in mindestens zwei Zonen unterteilt ist, und daß die Funktionselemente (10, 12, 14, 16, 18) je nach Größe oder Funktion eine oder mehrere Zonen überdecken.

11. Kraftfahrzeug nach einem der Ansprüche 1 bis 10, **dadurch gekennzeichnet, daß** auf der Innenseite (8) der Verschlußklappe (4) mindestens ein elektrisches Kontaktelement (88) zur Versorgung elektrischer oder elektronischer Funktionselemente (16) mit Strom vorgesehen ist.

12. Kraftfahrzeug nach einem der Ansprüche 1 bis 11, **dadurch gekennzeichnet, daß** die Funktionselemente mindestens eine Telekommunikationseinrichtung (16), mindestens einen Trinkgefäßhalter (14), mindestens einen Brillenhalter (12) und/oder mindestens einen Spender (10) für Kosmetiktücher (60) umfassen.

13. Kraftfahrzeug nach Anspruch 12, **dadurch gekennzeichnet, daß** die Telekommunikationseinrichtung ein Mobiltelefon (16), ein Fax-Gerät, eine Satelliten-Navigationseinrichtung und/oder ein Datenmodem umfaßt.

14. Kraftfahrzeug nach einem der Ansprüche 1 bis 13, **dadurch gekennzeichnet, daß** die Verschlußklappe (4) zwei in Bezug zueinander schwenkbare Klappenteile (100, 102) umfaßt, von denen ein äußeres Klappenteil (102) auf seiner Innenseite die Funktionselemente (10, 12, 14, 16, 18) trägt und ein inneres Klappenteil (100) bei vollständig geschlossener Verschlußklappe (4) und/oder bei vollständig geöffneter Verschlußklappe (4) mindestens einen Teil der Funktionselemente (10, 12, 14, 16, 18) verdeckt.

15. Kraftfahrzeug nach Anspruch 14, **dadurch gekennzeichnet, daß** der innere Klappenteil (100) bei vollständig geschlossener Verschlußklappe (4) und/oder bei vollständig geöffneter Verschlußklappe (4) gegen die Innenseite des äußeren Klappenteils (102) und/oder gegen mindestens einen Teil der Funktionselemente (10, 12, 14, 16, 18) anliegt.

16. Kraftfahrzeug nach Anspruch 14 oder 15, **dadurch gekennzeichnet, daß** der innere Klappenteil (100) und der äußere Klappenteil (102) im wesentlichen deckungsgleich sind.

17. Kraftfahrzeug nach einem der Ansprüche 14 bis 16, **dadurch gekennzeichnet, daß** zum vollständigen Öffnen und Schließen der Verschlußklappe (4) der äußere Klappenteil (102) gemeinsam mit dem inneren Klappenteil (100) verschwenkbar ist, und daß zum Freilegen der Funktionselemente (10, 12, 14, 16, 18) der äußere Klappenteil (102) allein verschwenkbar ist.

18. Kraftfahrzeug nach einem der Ansprüche 14 bis 17, **dadurch gekennzeichnet, daß** ein Betätigungsknopf (108) zum Öffnen des äußeren Klappenteils (102) in einer ersten Richtung bewegbar ist und zum gemeinsamen Öffnen des äußeren und des inneren Klappenteils in einer zur ersten Richtung entgegengesetzten zweiten Richtung bewegbar ist.

19. Kraftfahrzeug nach einem der Ansprüche 14 bis 18, **gekennzeichnet durch** eine zwischen dem inneren und dem äußeren Klappenteil (100, 102) angeordnete Anschlagvorrichtung (106), die eine Bewegung des äußeren Klappenteils (102) über eine im wesentlichen horizontale Endstellung hinaus verhindert, wenn nur das äußere Klappenteil (102) geöffnet wird.

20. Kraftfahrzeug nach einem der Ansprüche 1 bis 19, **dadurch gekennzeichnet, daß** zumindest eines der Funktionselemente (10, 12, 14, 16, 18) einen Halter (14) für ein Trinkgefäß (70) oder eine Getränkedose umfaßt und ein oberer Rand (80) des Halters (14) in Richtung eines oberen Randes (82) eines vom Halter (14) aufgenommenen Trinkgefäßes (70) beweglich ist, so daß er das Trinkgefäß (70) in größerer Nähe zu dessen oberem Rand (82) abstützt und dadurch ein Umkippen des Trinkgefäßes (70) besser verhindert.

21. Kraftfahrzeug nach Anspruch 20, **dadurch gekennzeichnet, daß** der Halter (14) zwei beweglich miteinander verbundene Teile (72, 74) umfaßt, von denen das erste Teil (72) in Bezug zur Verschlußklappe (4) unbeweglich ist und das zweite, den oberen Rand (80) des Halters (14) aufweisende Teil (74) in Bezug zum ersten Teil (72) im wesentlichen senkrecht zur Innenseite (8) der Verschlußklappe (4) beweglich ist.

22. Kraftfahrzeug nach Anspruch 21, **dadurch gekennzeichnet, daß** die beiden Teile (72, 74) teleskopierbar sind.

23. Kraftfahrzeug nach Anspruch 21 oder 22, **dadurch gekennzeichnet, daß** eines der beiden Teile (72) eine Kulissenführung (76) und das andere (74) einen in die Kulissenführung (76) eingreifenden Führungsnocken (78) aufweist.

24. Kraftfahrzeug nach Anspruch 21, **dadurch gekennzeichnet, daß** die beiden Teile durch einen ausziehbaren Faltenbalg oder ein anderes nachgiebiges Element miteinander verbunden sind.

25. Kraftfahrzeug nach einem der Ansprüche 21 bis 24, **dadurch gekennzeichnet, daß** die beiden Teile mindestens in einer oberen Endstellung des zweiten Teils miteinander verrastbar sind.

26. Kraftfahrzeug nach einem der Ansprüche 1 bis 25, **dadurch gekennzeichnet, daß** der Modulträger ein Steckfeld zur lösbaren Befestigung von mindestens zwei austauschbaren Funktionselementen (10, 12, 14, 16, 18) aufweist.

## Claims

1. Motor vehicle containing a glove compartment and a pivotable closure lid and at least one functional element which is mounted on an inner side of the closure lid facing the glove compartment and is accommodated invisibly in the interior of the glove compartment when the closure lid is completely closed and is easily accessible when the closure lid is opened, **characterized in that** at least two different functional elements (10, 12, 14, 16, 18) of modular design are mounted so as to be capable of being interchanged one with the other on the inner side (8) of the closure lid (4) which is embodied as a module carrier.

2. Motor vehicle according to Claim 1, **characterized in that** the functional elements (10, 12, 14, 16, 18) are detachably mounted on the inside (8) of the closure lid (4) by means of plug-type connections (28, 30).

3. Motor vehicle according to Claim 2, **characterized in that** the plug-type connections (28, 30) have plug elements (28) which protrude beyond an underside (26), facing the closure lid (4) of the functional elements (10, 12, 14, 16, 18), and receptacle openings (42), formed on the inner side (8) of the closure lid (4), for the plug elements (28).

4. Motor vehicle according to Claim 3, **characterized in that** the plug elements (28) which are introduced into the receptacle openings (42) are held in engagement with the receptacle openings (42) in a frictionally locking fashion.

5. Motor vehicle according to Claim 3 or 4, **characterized in that** the plug elements (28) and/or boundaries (40) of the receptacle openings (42) are elastically deformable.

6. Motor vehicle according to Claim 5, **characterized in that** the plug elements (28) are held in engagement with the receptacle openings (42) in a frictionally locking fashion by restoring forces owing to an elastic deformation of the plug elements (28) and/or of the boundaries of the receptacle openings (42).

7. Motor vehicle according to Claim 5, **characterized in that** the plug elements (28) are held in engagement with the receptacle openings (42) by latching.

8. Motor vehicle according to Claim 7, **characterized in that** the receptacle openings (42) have undercuts for a widened free end (38) of the plug elements (28).

9. Motor vehicle according to one of Claims 3 to 8, **characterized in that** at least the receptacle openings (42) are of elongated construction and they permit the functional elements (10, 12, 14, 16, 18) to be displaced in the longitudinal direction of the closure lid (4).

10. Motor vehicle according to one of Claims 1 to 8, **characterized in that** the inner side (8) of the closure lid (4) is embodied as a pinboard and is guided into at least two zones, and **in that** the functional elements (10, 12, 14, 16, 18) cover one or more zones depending on the size or function.

11. Motor vehicle according to one of Claims 1 to 10, **characterized in that** at least one electrical contact element (88) on the inner side (8) of the closure lid (4) is provided with current in order to supply electrical or electronic functional elements (16).

12. Motor vehicle according to one of Claims 1 to 11, **characterized in that** the functional elements comprise at least one telecommunications device (16), at least one drinks holder (14), at least one holder (12) for spectacles and/or at least one dispenser (10) for cosmetic wipes (60).

13. Motor vehicle according to Claim 12, **characterized in that** the telecommunications device comprises a mobile phone (16), a fax device, a satellite navigation device and/or a data modem.

14. Motor vehicle according to one of Claims 1 to 13, **characterized in that** the closure lid (4) comprises two lid parts (100, 102) which can be pivoted with respect to one another, an outer lid part (102) of which is fitted with the functional elements (10, 12, 14, 16, 18) on its inner side, and an inner lid part (100) of which covering at least some of the functional elements (10, 12, 14, 16, 18) when the closure lid (4) is completely closed and/or when the closure lid (4) is completely opened.

15. Motor vehicle according to Claim 14, **characterized in that** the inner lid part (100) bears against the inside of the outer lid part (102) and/or against at least some of the functional elements (10, 12, 14, 16, 18) when the closure lid (4) is completely closed and/or when the closure lid (4) is completely opened.

16. Motor vehicle according to Claim 14 or 15, **characterized in that** the inner lid part (100) and the outer lid part (102) are essentially congruent.

17. Motor vehicle according to one of Claims 14 to 16, **characterized in that**, in order to completely open and close the closure lid (4), the outer lid part (102) can be pivoted together with the inner lid part (100) and **in that**, in order to expose the functional elements (10, 12, 14, 16, 18), the outer lid part (102) can be pivoted alone.

18. Motor vehicle according to one of Claims 14 to 17, **characterized in that** a confirmation button (108) can be moved in a first direction in order to open the outer lid part (102), and can be moved in a second direction, opposed to the first direction, in order to open the outer and inner lid parts together.

19. Motor vehicle according to one of Claims 14 to 18, **characterized by** a stop device (106) which is arranged between the inner and outer lid parts (100, 102) and prevents the outer lid part (102) moving beyond an essentially horizontal end position if only the outer lid part (102) is opened.

20. Motor vehicle according to one of Claims 1 to 19, **characterized in that** at least one of the functional elements (10, 12, 14, 16, 18) comprises a holder (14) for a drinks vessel (70) or a drinks can, and an upper edge (80) of the holder (14) can be moved in the direction of an upper edge (82) of a drinks vessel (70) which is held by the holder (14), so that it supports the drinks vessel (70) in greater proximity to its upper edge (82) and as a result more satisfactorily prevents the drinks vessel (70) from tipping over.

21. Motor vehicle according to Claim 20, **characterized in that** the holder (14) comprises two parts (72, 74) which are movably connected to one another, the first part (72) being non-movable with respect to the closure lid (4), and the second part (74) having the upper edge (80) of the holder (14) being movable with respect to the first part (72) and in an essentially perpendicular direction with respect to the inside (8) of the closure lid (4).

22. Motor vehicle according to Claim 21, **characterized in that** the two parts (72, 74) are telescopic.

23. Motor vehicle according to Claim 21 or 22, **characterized in that** one of the two parts (72) has a guide rail (76), and the other (74) has a guide can (78) which engages in the guide rail (76).

24. Motor vehicle according to Claim 21, **characterized in that** the two parts are connected to one another by an extendable folding bellows or some other resilient element.

25. Motor vehicle according to one of Claims 21 to 24, **characterized in that** the two parts can be latched one into the other at least in an upper end position of the second part.

26. Motor vehicle according to one of Claims 1 to 25, **characterized in that** the module carrier has a pin field for detachably mounting at least two exchangeable functional elements (10, 12, 14, 16, 18).

## Revendications

1. Véhicule automobile comprenant une boîte à gants avec un couvercle de fermeture rabattable et au moins un élément fonctionnel disposé sur la face intérieure du couvercle de fermeture tournée vers la boîte à gants, placé de manière non visible à l'intérieur du compartiment à gants quand le couvercle de fermeture est complètement fermé et facilement accessible quand le couvercle de fermeture est ouvert, **caractérisé en ce que**, sur la face intérieure (8) du couvercle de fermeture (4) conçue en tant que support de modules, au moins deux éléments fonctionnels différents (10, 12, 14, 16, 18) conçus de manière modulaire sont fixés de manière interchangeable les uns par rapport aux autres.

2. Véhicule automobile selon la revendication 1, **caractérisé en ce que** les éléments fonctionnels (10, 12, 14, 16, 18) sont fixés sur la face intérieure (8) du couvercle de fermeture (4) à l'aide de connecteurs mâles-femelles (28, 30) de manière à être amovibles.

3. Véhicule automobile selon la revendication 2, **caractérisé en ce que** les connecteurs mâles-femelles (28, 30) disposent d'éléments d'enfichage (28) faisant saillie par rapport à une face inférieure (26) des éléments fonctionnels (10, 12, 14, 16, 18) tournée vers le couvercle de fermeture (4) et **en ce qu'**ils présentent des ouvertures de logement (42) pour les éléments d'enfichage (28), réalisées sur la face intérieure (8) du couvercle de fermeture (4).

4. Véhicule automobile selon la revendication 3, **caractérisé en ce que** les éléments d'enfichage (28) insérés dans les ouvertures de logement (42) sont maintenus engagés dans les ouvertures de logement (42) sous l'effet du frottement.

5. Véhicule automobile selon la revendication 3 ou 4, **caractérisé en ce que** les éléments d'enfichage (28) et/ou les bords (40) des ouvertures de logement (42) sont déformables élastiquement.

6. Véhicule automobile selon la revendication 5, **caractérisé en ce que** les éléments d'enfichage (28) sont maintenus engagés dans les ouvertures de logement (42) sous l'effet du frottement grâce aux forces de rappel suite à une déformation élastique des éléments d'enfichage (28) et/ou des bords des ouvertures de logement (42) .

7. Véhicule automobile selon la revendication 5, **caractérisé en ce que** les éléments d'enfichage (28) sont maintenus engagés dans les ouvertures de logement (42) par encliquetage.

8. Véhicule automobile selon la revendication 7, **caractérisé en ce que** les ouvertures de logement (42) présentent des découpes arrière pour une extrémité libre prolongée (38) des éléments d'enfichage (28).

9. Véhicule automobile selon l'une quelconque des revendications 3 à 8, **caractérisé en ce qu'**au moins les ouvertures de logement (42) sont réalisées de façon à s'étendre longitudinalement et permettent un coulissement des éléments fonctionnels (10, 12, 14, 16, 18) dans le sens longitudinal du couvercle de fermeture (4) .

10. Véhicule automobile selon l'une quelconque des revendications 1 à 8, **caractérisé en ce que** la face intérieure (8) du couvercle de fermeture (4) est conçue comme espace d'enfichage et est divisée en deux zones, au moins, et **en ce que** les éléments fonctionnels (10, 12, 14, 16, 18) recouvrent, selon leur taille ou leur fonction, une ou plusieurs zones.

11. Véhicule automobile selon l'une quelconque des revendications 1 à 10, **caractérisé en ce que**, sur la face intérieure (8) du couvercle de fermeture (4), au moins un élément de contact électrique (88) a été prévu pour l'alimentation en courant des éléments fonctionnels (16) électriques ou électroniques.

12. Véhicule automobile selon l'une quelconque des revendications 1 à 11, **caractérisé en ce que** les éléments fonctionnels comprennent au moins un dispositif de télécommunication (16), au moins un porte-gobelet (14), au moins un porte-lunettes (12) et/ou au moins un distributeur (10) de mouchoirs en papier (60) .

13. Véhicule automobile selon la revendication 12, **caractérisé en ce que** le dispositif de télécommunication comprend un téléphone mobile (16), un télécopieur, un équipement de navigation par satellite et/ou un modem pour données.

14. Véhicule automobile selon l'une quelconque des revendications 1 à 13, **caractérisé en ce que** le couvercle de fermeture (4) comprend deux clapets (100, 102) rabattables l'un sur l'autre, dont un clapet extérieur (102) porte, sur sa face intérieure, les éléments fonctionnels (10, 12, 14, 16, 18) et dont un clapet intérieur (100) cache au moins une partie des éléments fonctionnels (10, 12, 14, 16, 18) quand le couvercle de fermeture (4) est complètement fermé et/ou quand le couvercle de fermeture (4) est complètement ouvert.

15. Véhicule automobile selon la revendication 14, **caractérisé en ce que**, quand le couvercle de fermeture (4) est complètement fermé et/ou quand le couvercle de fermeture (4) est complètement ouvert, le clapet intérieur (100) est adjacent à la face intérieure du clapet extérieur (102) et/ou à au moins une partie des éléments fonctionnels (10, 12, 14, 16, 18).

16. Véhicule automobile selon la revendication 14 ou 15, **caractérisé en ce que** le clapet intérieur (100) et le clapet extérieur (102) coïncident pour l'essentiel.

17. Véhicule automobile selon l'une quelconque des revendications 14 à 16, **caractérisé en ce que**, pour l'ouverture et la fermeture complètes du couvercle de fermeture (4), le clapet extérieur (102) est rabattable en même temps que le clapet intérieur (100) et **en ce que**, pour accéder aux éléments fonctionnels (10, 12, 14, 16, 18), seul le clapet extérieur (102) est rabattable.

18. Véhicule automobile selon l'une quelconque des revendications 14 à 17, **caractérisé en ce qu'**un bouton de manoeuvre (108) peut être déplacé dans une première direction pour ouvrir le clapet extérieur (102) et peut être déplacé dans une deuxième direction opposée à la première pour ouvrir en même temps les clapets extérieur et intérieur.

19. Véhicule automobile selon l'une quelconque des revendications 14 à 18, **caractérisé par** un dispositif de butée (106) placé entre les clapets intérieur et extérieur (100, 102) et qui empêche un déplacement du clapet extérieur (102) au-delà d'une position finale quasiment horizontale quand seul le clapet extérieur (102) est ouvert.

20. Véhicule automobile selon l'une quelconque des revendications 1 à 19, **caractérisé en ce qu'**au moins un des éléments fonctionnels (10, 12, 14, 16, 18) comprend un support (14) pour un gobelet (70) ou une cannelle et **en ce qu'**un bord supérieur (80) du support (14) est mobile en direction d'un bord supérieur (82) d'un gobelet (70) placé dans le support (14) de sorte qu'il maintienne le gobelet (70) essentiellement à proximité de ce bord supérieur (82) et empêche donc mieux un renversement du gobelet (70).

21. Véhicule automobile selon la revendication 20, **caractérisé en ce que** le support (14) comprend deux parties (72, 74) reliées entre elles de manière à pouvoir se déplacer, dont la première partie (72) est immobile par rapport au couvercle de fermeture (4) et la deuxième partie (74), présentant le bord supérieur (80) du support (14), est mobile par rapport à la première partie (72) de manière quasiment perpendiculaire à la face intérieure (8) du couvercle de fermeture (4).

22. Véhicule automobile selon la revendication 21, **caractérisé en ce que** les deux parties (72, 74) peuvent être télescopiques.

23. Véhicule automobile selon la revendication 21 ou 22, **caractérisé en ce qu'**une des deux parties (72) présente un guidage à coulisse (76) et **en ce que** l'autre partie (74) dispose d'une came de guidage (78) s'engageant dans le guidage à coulisse (76).

24. Véhicule automobile selon la revendication 21, **caractérisé en ce que** les deux parties sont reliées l'une à l'autre par un soufflet extensible ou un autre élément flexible.

25. Véhicule automobile selon l'une quelconque des revendications 21 à 24, **caractérisé en ce que** les deux parties peuvent s'encliqueter l'une avec l'autre au moins dans une position finale supérieure de la deuxième partie.

26. Véhicule automobile selon l'une quelconque des revendications 1 à 25, **caractérisé en ce que** le support de modules présente un espace d'enfichage pour la fixation amovible d'au moins deux éléments fonctionnels (10, 12, 14, 16, 18) interchangeables.
